# EUROPÄISCHE PATENTANMELDUNG

(11) **EP 2 554 886 A2**
(43) Veröffentlichungstag der Anmeldung: **06.02.2013**
(21) Anmeldenummer: 12173977.5
(22) Anmeldetag: 28.06.2012
(51) Int. Cl.: F16L 5/04, F16L 57/04, F16L 59/14

(54) **Verwendung eines passiven Brandschutzsystems für Rohrleitungen und entsprechendes Verfahren.**

(30) Priorität: 03.08.2011 DE 102011080330
(71) Anmelder: HILTI Aktiengesellschaft, 9494 Schaan (LI)
(72) Erfinder: Münzenberger, Herbert, 65191 Wiesbaden (DE)

(57) **Zusammenfassung**

Es wird eine Maßnahme zur Verlängerung der Zeitspanne in dem ein Leitungsstrang, insbesondere eine Rohrleitung (1) aus einem Material mit einem Wärmeleitkoeffizienten λ_{R} in einer Brandschutzinstallation unterhalb einer kritischen Temperatur bleibt und damit zur Erhöhung des T-Rating-Wertes nach ASTM E814 (UL1479), beschrieben. Unmittelbar im Anschluss an die Abschottung (3) einer Durchführungsöffnung in einem Bauteil (2) wird ein Leitungsstrang, insbesondere eine Rohrleitung (1) bei einer Wanddurchführung beidseitig und bei einer Deckendurchführung oberhalb der Durchführöffnung mit einem Geflecht (4) aus einem nicht brennbaren Material mit einem Wärmeleitkoeffizient λ_{G} umwickelt, mit der Maßgabe, dass der Wärmeleitkoeffizient λ_{G} größer als der Wärmeleitkoeffizient λ_{R} ist.

## Beschreibung

Die vorliegende Erfindung betrifft das Gebiet des Brandschutzes, insbesondere ein passives Brandschutzsystem für Rohrleitungen, insbesondere für Rohrleitungen aus Materialien mit hohem Wärmeleitkoeffizienten, wie Rohrleitungen aus Metallen oder metallhaltigen Materialien, bei dem durch eine Vorrichtung Wärme von der Rohrleitung abgeführt wird, um so die Zeitspanne zu verlängern, innerhalb der die Rohrleitung in einer Brandschutzinstallation unterhalb einer kritischen Temperatur bleibt, d.h. die Temperatur der Rohrleitung am Messpunkt nicht um 180K über die Anfangstemperatur, d.h. die Raum- bzw. Umgebungstemperatur gestiegen ist.

Zur Durchführung von Leitungssträngen, wie z. B. Kabel oder Rohrleitungen, durch Bauteile, wie Wände, Decken und dergleichen, werden in Bauteilen Durchbrüche vorgesehen. Bei speziellen Gebäuden, wie öffentliche Gebäude, Krankenhäuser, Schulen und dergleichen, ist in vielen Ländern vorgeschrieben, sogenannte Brandschutzbereiche einzurichten. Hierdurch soll verhindert werden, dass sich im Brandfalle das Feuer und die dadurch entstandenen Rauchgase schnell in dem gesamten Gebäude ausbreiten. Daher müssen die Durchbrüche gegen die Ausbreitung von Feuer oder Rauchgas durch den Durchbruch brandsicher und rauchgasdicht verschlossen werden. Es sind verschiedene Vorrichtungen insbesondere zum brandsicheren und rauchgasdichten Durchführen eines Leitungsstranges durch einen in einem Bauteil ausgebildeten Durchbruch mit einem elastischen Dichtkörper bekannt, der zumindest eine Durchführöffnung aufweist.

Ein Feuer kann sich dadurch ausbreiten, dass die Flammen auf einen anderen Raum oder ein anderes Stockwerk überschlagen. Aber auch wenn keine Flammen überschlagen, kann in einem Raum Feuer ausbrechen und zwar dann, wenn die Hitze auf der feuerabgewandten Seite der Wand so groß wird, dass sich brennbare Materialien selbst entzünden. Insbesondere Rohrleitungen aus Materialien, welche Wärme gut leiten, wie Stahl- oder Metallrohre, stellen hier ein Problem dar. Diese erhitzen sich durch den Brand auf der einen Seite des Bauteils und leiten die Wärme trotz gegebenenfalls vorhandener Brandschutzvorrichtungen, wie Brandschutzschotts, durch das Bauteil, so dass sich nach einiger Zeit die Rohrleitung auf der feuerabgewandeten Seite derart erhitzt, dass der Flammpunkt der angrenzenden Materialien, wie Tapeten, Vorhänge und ähnliches, erreicht werden kann. Ist dies der Fall, kann es zu einer Entzündung und somit zu einem Feuer auf der feuerabgewandten Seite kommen.

Insbesondere in den USA wird für Brandschutzanwendungen neben den auch in Europa üblichen Normen, wie die Feuerwiderstandsdauer eines Bauteils oder einer Abschottung, immer häufiger zusätzlich die Einhaltung sogenannter T-Rating-Limits vorgeschrieben. Brandschutzsysteme werden in den USA nach ASTM E814 (UL1479) getestet, wobei zwei Bemessungsgrößen (Ratings) getestet werden, das sogenannte F- und T-Rating. Das F-Rating gibt die minimale Zeitspanne an, bei der aufgezeigt werden konnte, dass eine Feuerausbreitung verhindert wurde. Das T-Rating gibt die Zeitspanne an, innerhalb der die Temperatur eines Messpunktes auf einer Installation auf der feuerabgewandeten Seite einer Wand- oder Deckendurchführung um 180K, gegenüber der Anfangstemperatur ansteigt. Die Temperatur von 180K über Raum- bzw. Umgebungstemperatur wird auch als kritische Temperatur bezeichnet. Dies soll sicher stellen, dass die Temperatur auf der feuerabgewandten Wandseite den Flammpunkt keines der auf dieser Seite der Wand befindlichen Materialien erreicht, so dass eine Selbstentzündung aufgrund erhöhter Temperatur verhindert wird.

Die zur Abschottung der Durchführungen von nichtmetallischen abquetschbaren Leitungssträngen verwendeten Dichtkörper, Massen oder Manschetten verhindern im Brandfall nur, dass die giftigen Rauchgase und das Feuer nicht in den angrenzenden Raum übertreten können. Darüber hinaus kann verhindert werden, dass heiße Luft durch die Durchführung hindurch tritt bzw. durch die Leitungsstränge in den anderen Raum übertragen wird.

Insbesondere bei Wand- und Deckendurchführungen von nicht isolierten Leitungssträngen, insbesondere Rohren oder Leitungen, wie etwa Metallrohren, ist dies nicht ohne zusätzliche Maßnahmen zu realisieren, da die Metallrohre bzw. -leitungen, die Wärme trotz Abschottung der Durchführung aufgrund ihrer guten Wärmeleitfähigkeit durch die Abschottung hindurch auf die andere Wandseite übertragen. Dies führt dazu, dass die den Leitungsstrang umgebenden bzw. daran angrenzenden Materialien ebenfalls erhitzt werden, was bei Überschreiten des jeweiligen Flammpunktes trotz Abschottung der Durchführung zu einer Übertragung des Feuers führen kann. Besonders bei dünnen Wänden und Decken, wie etwa bei nachträglich installierten Trockenbauwänden, ist die Wärmeübertragung durch die Wand oder die Decke über Rohrleitungen kritisch, da die Wand- oder Deckendicke und das Material oft nicht ausreicht, die Wärme von der erhitzten Rohrleitung abzuführen.

Dies kann dadurch verhindert werden, dass zusätzliche Vorkehrungen getroffen werden die entweder eine übermäßige Erhitzung des Leitungsstrangs, wie ein Rohr bzw. eine Leitung, verhindern oder die durch das Leitungsstrangmaterial transportierte Wärme derart abführen, dass eine Wärmeleitung entlang des Leitungsstrangs durch die Abschottung hindurch verhindert bzw. derart minimiert wird, dass die Temperatur des Leitungsstrangs auf der feuerabgewandten Seite den Flammpunkt der daran angrenzenden Materialien nicht erreicht.

Die übermäßige Erhitzung kann verhindert werden, indem ein Leitungsstrang, wie ein Rohr bzw. eine Leitung, mit einer nichtbrennbaren Isolationsschicht verschalt bzw. ummantelt wird, wie dies beispielsweise in der US 2006/0096207 A1 beschrieben ist. Die US 2006/0096207 A1 beschreibt eine Vorrichtung zum Kühlen einer Rohrleitung, die eine Vielzahl an einzelnen Kühlaggregaten, die mit Wasser oder einem anderen geeigneten Kühlmittel gefüllt sind, aufweist, wobei die Kühlaggregate von einer Manschette umgeben sind, die wiederum mit Lüftungsschlitzen versehen ist.

Nachteilig an dieser Lösung ist, dass für jeden Rohrumfang eine eigene Manschette und ein eigenes Kühlaggregat mit dem entsprechenden Umfang bereit gehalten werden muss. Hierdurch erhöht sich der Arbeits- und Materialaufwand erheblich.

Eine andere Möglichkeit besteht darin, das Rohr bzw. die Leitung mit einer Beschichtung zu versehen, wie dies beim Stahlbrandschutz üblich ist.

Die Beschichtungen haben etwa den Nachteil, dass sie zum einen teuer, schwierig in der Auftragung und empfindlich gegenüber mechanischer Beanspruchung bzw. Einwirkung sind und über eine eher geringe Wärmeleitfähigkeit verfügen. Darüber hinaus liegt die Aktivierungstemperatur der in der Beschichtung eingesetzten Brandschutzadditive zur Ausbildung einer isolierenden Ascheschicht im Allgemeinen zwischen 250°C bis 300°C was im Allgemeinen oberhalb des kritischen Bereichs von 180K liegt. Die Intumeszenz durch die Brandschutzadditive wird erst bei überschreiten des kritischen Bereichs ausgelöst.

Es ist daher Aufgabe der Erfindung ein universelles System bereitzustellen, das einfach in der Handhabung ist, d.h. sich problemlos an die unterschiedlichen Geometrien der zu ummantelnden Leitungsstränge anpassen lässt, an die erforderliche Länge angepasst werden kann, billig in der Herstellung und der Weiterverarbeitung und im Brandfalle unbedenklich für die Umwelt ist und die erforderlichen Anforderungen des Brandschutzes zu erfüllen ermöglicht.

Erfindungsgemäß wird die Aufgabe dadurch gelöst, dass unmittelbar im Anschluss an die Abschottung der Durchführungsöffnung in einem Bauteil ein Leitungsstrang bei einer Wanddurchführung beidseitig und bei einer Deckendurchführung oberhalb der Durchführöffnung mit einem Geflecht aus einem nicht brennbaren Material mit hohem Wärmeleitkoeffizient (λ_{G}) umwickelt wird.

Der im Sinne der Erfindung verwendete Begriff *Geflecht* umfasst ein Produkt aus dem Ineinanderschlingen mehrerer Stränge aus biegsamem Material und somit alle maschenartigen Produkte, insbesondere Gewebe, Gewirke und Gestricke, beispielsweise aus Drähten. Der im Sinne der Erfindung verwendete Begriff *kritische Temperatur* bedeutet eine Temperatur, die um mehr als 180K über Raum- bzw. Umgebungstemperatur liegt. Bei einer Raumtemperatur von 22°C läge die kritische Temperatur bei 202°C. Als *Brandschutzinstallation* wird eine mit Brandschutzmaterial abgeschottete Durchführungsöffnung in einem Bauteil, durch das Leitungsstränge gelegt wurden, verstanden. Abschottung ist dabei, das Verschließen der nach der Installation der Rohrleitung verbleibenden Durchführungsöffnung mit Brandschutzmaterial, wie Schaum oder Mörtel, denen Brandschutzadditive zugesetzt sind, und/oder ein intumeszenzfähiges Schaumformteil in Form eines Mauersteins oder einer Matte oder mit Brandschutzmaterial gefüllte Säcke. Als *Leitungsstrang* wird sowohl eine einzelne Leitung, wie etwa eine Rohrleitung oder Kabelleitung, oder ein Bündel aus zwei oder mehreren Leitungen, wie etwa Rohrleitungen oder Kabelleitungen, verstanden.

Ein erster Gegenstand der Erfindung ist daher die Verwendung eines form- und biegbaren Geflechts aus einem nicht brennbaren Material mit einem Wärmeleitkoeffizient λ_{G} zur Verlängerung der Zeitspanne in der ein Leitungsstrang, insbesondere eine Rohrleitung, die aus einem Material mit einem Wärmeleitkoeffizienten λ_{R} besteht, in einer Brandschutzinstallation unterhalb einer kritischen Temperatur bleibt, mit der Maßgabe, dass der Wärmeleitkoeffizient λ_{G} größer als der Wärmeleitkoeffizient λ_{R} ist. Hierdurch wird die Wärmeabgabe von Leitungssträngen, insbesondere Rohrleitungen, deren Wärmeleitkoeffizient λ_{R} kleiner als der Wärmeleitkoeffizient λ_{G} des Geflechts ist, erhöht bzw. verstärkt, so dass die Zeitspanne in der der Leitungsstrang unterhalb einer kritischen Temperatur bleibt, verlängert werden kann.

Das Geflecht muss hinreichend form- und biegbar sein, damit es einfach, d.h. ohne erhöhte Kraftanstrengung und damit von Hand und ohne zusätzliches Werkzeug um einen Leitungsstrang, insbesondere eine Rohrleitung gelegt werden kann. Bevorzugt sollte das Material so biegsam sein, dass es die Form, in die es nach dem Umlegen um einen Leitungsstrang gebracht worden ist, beibehält. Dies erleichtert die Montage und die Befestigung bzw. Fixierung des Geflechts an dem Leitungsstrang. Auch ist das Geflecht in Längs- und Querrichtung des Leitungsstrangs nachgiebig, so dass es thermische Dehnungsdifferenzen ausgleichen kann, ohne dass sich die Kontaktfläche zwischen Geflecht und Rohrleitung verkleinert. Der Zusammenhalt kann durch Nieten oder ähnliches hergestellt sein.

Die nicht brennbaren Materialien sind bevorzugt unter Edelstahl, Kupfer, Aluminium oder Legierungen davon ausgewählt. Es können aber auch nichtmetallische Fasern, beispielsweise anorganische Fasern, Glasfasern und dergleichen, welche mit Metallen oder Legierungen beschichtet sind, als Material für das Geflecht verwendet werden. Schließlich hat sich als Material für ein Metallgeflecht Kupfer oder Aluminium als besonders vorteilhaft erwiesen, weil diese Metalle an sich sehr gute Wärmeleiter sind (Wärmeleitkoeffizienten: λ_{Cu} (rein) = 401 W/(m·K); λ_{Cu} (Handelsware) = 240-380 W/(m·K); λ_{Al(99,5%)} = 236 W/(m·K)) und auch sonst vorteilhafte Eigenschaften hinsichtlich der Handhabung und Anwendung haben.

Der Wärmeleitkoeffizient λ_{G} des Materials aus dem das Geflecht besteht, sollte größer als der Wärmeleitkoeffizient λ_{R} des Materials sein, aus dem der Leitungsstrang, insbesondere die Rohrleitung besteht, damit eine Wärmeleitung von dem Leitungsstrang, insbesondere der Rohrleitung weg erfolgt. Nur dann kann sichergestellt werden, dass über die Länge des Leitungsstrangs, insbesondere der Rohrleitung die mit dem Geflecht umwickelt ist, hinreichend Wärme von dem Leitungsstrang abgeführt wird, damit unmittelbar nach dem Geflecht der Leitungsstrang die kritische Temperatur nicht übersteigt, bzw. die Zeitspanne bis der Leitungsstrang die kritische Temperatur erreicht hat, möglichst lange ist.

Bevorzugt weist das Geflecht zumindest an der der Rohrleitung abgewandten Fläche eine möglichst große Oberfläche auf, damit möglichst viel Wärme von dem Geflecht an die Umgebung abgegeben werden kann. Dann ist der Effekt der Kühlung der Rohrleitung möglichst groß.

Die Maschenweite sollte so gewählt werden, dass eine optimale Wärmeleitung von dem Leitungsstrang weg gewährleistet wird. Dementsprechend sollte die Maschenweite nicht zu groß gewählt werden, da ansonsten der Effekt der Isolierung eintritt und die erwünschte Funktion der Umwickelung nicht mehr erreicht werden kann.

Die Dicke und die Länge des Geflechts sind in Abhängigkeit von der Beschaffenheit des Leitungsstrangs, wie Material (Wärmeleitkoeffizient), Durchmesser, Wandstärke und dergleichen, so gewählt, dass hinreichend Wärme abgeführt werden kann, um die Anforderungen des Brandtests nach ASTM E814 (UL1479) zu erfüllen. Die Dicke kann einfach durch mehrfaches Umwickeln des Leitungsstrangs mit dem Geflecht variiert werden. Die Länge kann entweder durch Auswahl eines Geflechts mit entsprechender Breite oder einfach durch Zuschneiden variiert werden.

Zweckmäßig ist das Geflecht eine Art Endlosband, von dem je nach Bedarf und Anforderungen das benötigte Stück Geflecht abgelängt und gegebenenfalls weiter zurechtgeschnitten wird.

Ein weiterer Gegenstand der Erfindung ist ein Verfahren zur Verlängerung der Zeitspanne in der ein Leitungsstrang, insbesondere eine Rohrleitung in einer Brandschutzinstallation unterhalb einer kritischen Temperatur bleibt, die aus Materialien mit einem Wärmeleitkoeffizienten λ_{R} bestehen, wobei unmittelbar vor der Abschottung einer Durchführungsöffnung in einem Bauteil ein Leitungsstrang, insbesondere eine Rohrleitung ein- oder beidseitig mit einem Geflecht aus einem nicht brennbaren Material mit einem Wärmeleitkoeffizient λ_{G} umwickelt werden, mit der Maßgabe, dass der Wärmeleitkoeffizient λ_{G} größer als der Wärmeleitkoeffizient λ_{R} ist. Das Verfahren dient damit der Erhöhung des T-Rating-Wertes nach ASTM E814 (UL1479) von Leitungssträngen.

Zweckmäßig wird bei Leitungssträngen, insbesondere Rohrleitungen, durch Wanddurchbrüche diese beidseitig mit dem Geflecht umwickelt. Bei Durchführungen durch Decken ist es oft ausreichend, die Rohrleitung einseitig, d.h. oberhalb der Decke mit dem Geflecht zu umwickeln.

Bevorzugt wird der Leitungsstrang, insbesondere die Rohrleitung auf so einer Länge, in axialer Richtung des Leitungsstrangs, und mit so einer Dicke, in radialer Richtung des Leitungsstrangs, mit dem Geflecht umwickelt, dass hinreichend Wärme abgeführt wird, um die Zeitspanne zu verlängern, in der ein Leitungsstrang, insbesondere eine Rohrleitung in einer Brandschutzinstallation unterhalb einer kritischen Temperatur bleibt, d.h. die Temperatur des Leitungsstrangs und damit die Anforderungen des Brandtests nach ASTM E814 (UL1479) zu erfüllen. Dabei hängen die Länge und die Dicke von der Beschaffenheit des Leitungsstrangs, wie Material (Wärmeleitkoeffizient), Durchmesser, Wandstärke und dergleichen, ab.

Die Erfindung kann auf alle Leitungsstränge angewandt werden, die aus Materialien bestehen, die solch einen Wärmeleitkoeffizienten aufweisen, dass die Wärmeableitung über den Leitungsstrangabschnitt (in axialer Richtung), der in dem abgeschotteten Bauteildurchbruch liegt, so gering ist, dass die Temperatur des Leitungsstrangs auf der feuerabgewandten Seite nach der Abschottung derart ansteigen kann, dass sie über eine kritische Temperatur steigt und damit die Anforderungen des Brandtests nach ASTM E814 (UL1479) nicht erfüllt werden, wenn die Temperatur über einen direkt an dem Leitungsstrang angebrachten Temperaturfühler gemessen wird. Üblicherweise sind dies nichtisolierte Stahl- oder Metallrohrleitungen.

Im Folgenden wird die Erfindung anhand von Abbildungen näher beschrieben und erläutert. Es stellen dar:
- Fig. 1:: in Draufsicht einen mit Brandschutzmaterial abgeschotteten Mauerdurchbruch mit Belegung durch eine Rohrleitung (ohne Umwickelung);
- Fig. 2:: in Draufsicht einen mit Brandschutzmaterial abgeschotteten Mauerdruchbruch mit Belegung durch eine Rohrleitung mit Umwickelung;
- Fig. 3:: ein Diagramm über die Messung des Temperaturverlaufs an jeweils einem Messpunkt an einer Rohrleitung aus Fig. 1 und einer Rohrleitung aus Fig. 2;
- Fig. 4:: ein Diagramm über die Messung des Temperaturverlaufs an jeweils einem anderen Messpunkt an einer Rohrleitung aus Fig. 1 und einer Rohrleitung aus Fig. 2.

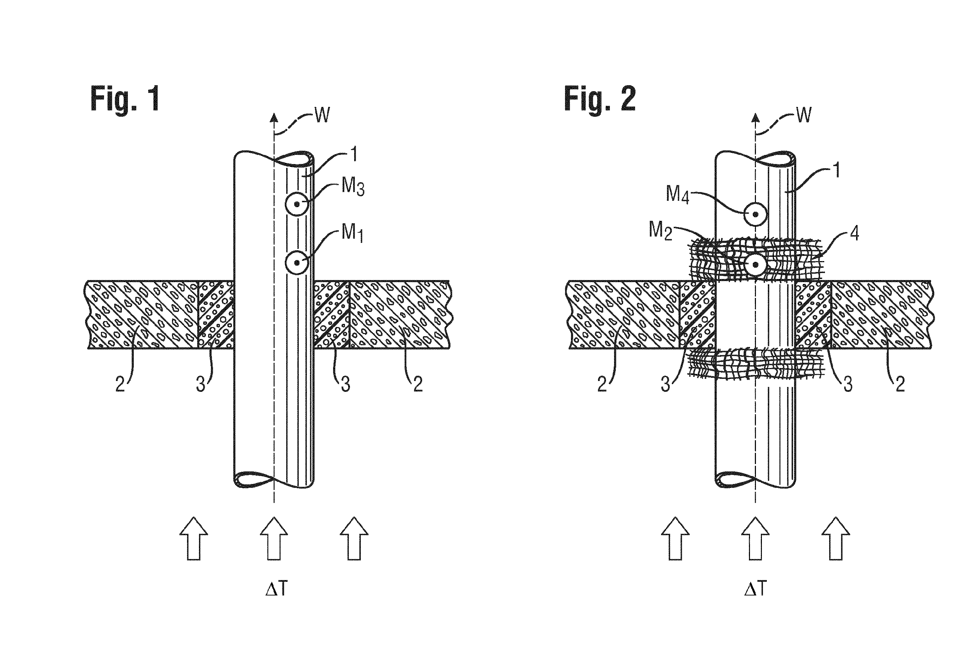

Fig. 1 zeigt eine Brandschutzinstallation aus einer Rohrleitung (**1**), die durch einen Durchbruch durch eine Mauer (**2**) führt. In dem dargestellten Beispiel ist die Rohrleitung (**1**) ein Kupferrohr mit einem Durchmesser von 78 mm. Der Mauerdurchbruch ist mit einem Brandschutzmaterial (**3**) rauchgas- und feuerdicht abgeschottet. Das Brandschutzmaterial kann dabei ein Schaum oder ein Mörtel, denen Brandschutzadditive zugesetzt sind, und/oder ein intumeszenzfähiges Schaumformteil in Form eines Mauersteins oder einer Matte oder mit Brandschutzmaterial gefüllte Säcke sein. Beim Brandtest erfolgt die Beflammung von einer Seite; dies entspricht in Fig. 1 von unten her aus Richtung der dicken Pfeile. Dementsprechend erfolgt die Wärmeleitung (**W**) innerhalb der Rohrleitung von der befeuerten Seite in Richtung der feuerabgewandten Seite.

Beim Brandtest erfolgt die Messung der Temperatur einmal direkt nach dem Mauerdurchbruch, wobei ein Temperaturfühler (**M₁**) in einem axialen Abstand von 25 mm von dem Mauerschott direkt auf der Rohrleitung (**1**) angebracht wird, und einmal in einem weiteren axialen Abstand von dem Mauerschott, wobei ein weiterer Temperaturfühler (**M₃**) in einem axialen Abstand von etwa 250 mm von dem Mauerschott direkt auf der Rohrleitung (**1**) angebracht wird.

Fig. 2 zeigt die Brandschutzinstallation aus Fig. 1, bei der die Rohrleitung (**1**) mit einem Aluminiumgeflecht (**4**) umwickelt ist. Das Aluminiumgeflecht weist eine Dicke in radialer Richtung der Rohrleitung (**1**) von 15 mm und eine Länge in axialer Richtung der Rohrleitung (**1**) von 250 mm auf. Auch hier erfolgt beim Brandtest die Beflammung von einer Seite; dies entspricht in Fig. 2 ebenfalls von unten her aus Richtung der dicken Pfeile. Dementsprechend erfolgt die Wärmeleitung (**W**) innerhalb der Rohrleitung von der befeuerten Seite in Richtung der feuerabgewandten Seite.

Beim Brandtest erfolgt die Messung der Temperatur einmal direkt nach dem Mauerschott, wobei ein Temperaturfühler (**M₂**) in einem axialen Abstand von 25 mm von dem Mauerschott direkt auf der Umwickelung (**4**) angebracht wird, und einmal in einem axialen Abstand von dem Mauerschott, direkt nach der Umwickelung (**4**), wobei ein weiterer Temperaturfühler (**M₄**) unmittelbar nach der Umwickelung (**4**) direkt auf der Rohrleitung (**1**) angebracht wird.

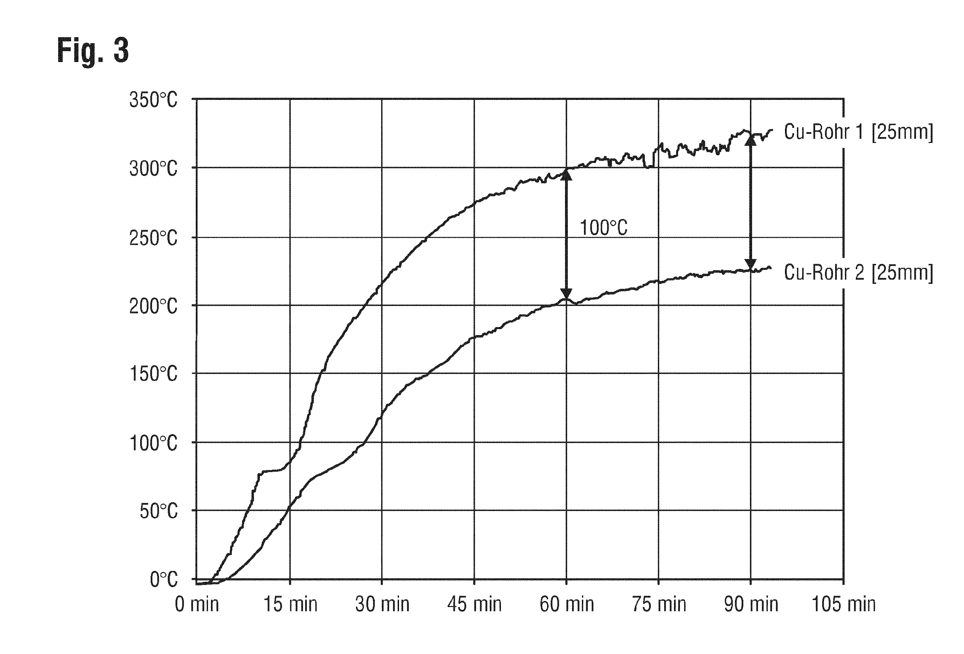

Fig. 3 zeigt den Temperaturverlauf während des Brandtests über eine Dauer von etwa 95 Minuten an den zwei Messpunkten **M₁** und **M₃**, die wie in Fig. 1 und Fig. 2 dargestellt, positioniert sind.

Wie aus den Kurven aus Fig. 3 ersichtlich ist, steigt die Temperatur an dem Messpunkt **M₁** (nicht umwickeltes Kupferrohr, 25mm nach Abschottung) relativ schnell an und erreicht bereits nach ca. 20 Minuten eine kritische Temperatur. Bei dem Messpunkt **M₃** (umwickeltes Kupferrohr, 25 mm nach Abschottung) wird eine kritische Temperatur erst nach etwa 50 Minuten erreicht. Nach ca. 60 Minuten ist eine Temperatur von 100°C an den beiden Messpunkten zu verzeichnen. Dies zeigt deutlich, dass durch die Umwickelung der Rohrleitung mit einem Geflecht gemäß der der Erfindung die Dauer verlängert werden konnte, innerhalb der die Rohrleitung in der Brandschutzinstallation unterhalb einer kritischen Temperatur bleibt.

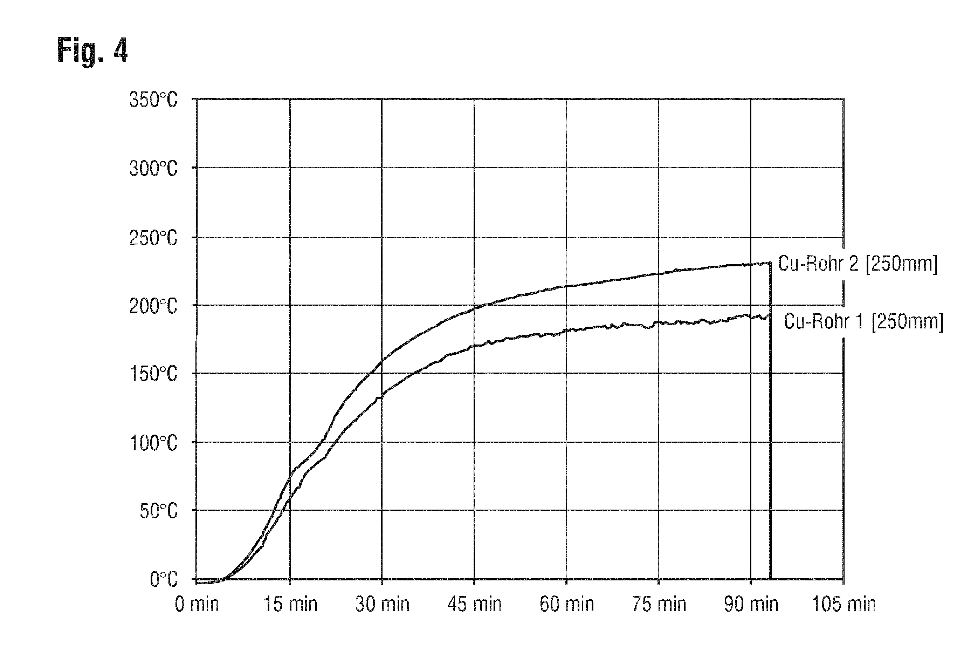

Fig. 4 zeigt den Temperaturverlauf während des Brandtests über eine Dauer von etwa 95 Minuten an den zwei Messpunkten **M₂** und **M₄**, die wie in Fig. 1 und Fig. 2 dargestellt, positioniert sind.

Wie aus den Kurven aus Fig. 4 ersichtlich ist, steigt die Temperatur an dem Messpunkt **M₂** (nicht umwickeltes Kupferrohr, 250 mm nach Abschottung) nicht so schnell an wie an dem Messpunkt **M₄** (umwickeltes Kupferrohr, 250 mm nach Abschottung). Dies deutet darauf hin, dass zu Beginn des Brandtests, d.h. bei niedrigen Temperaturen ohne Umwickelung mit dem Geflecht die Wärmeabgabe an die Umgebung durch das blanke Kupferohr besser ist. Dies zeigt, dass die Umwickelung auch einen gewissen isolierenden Effekt hat, der zunächst, noch im unkritischen Bereich, einer schnellen Wärmeabgabe entgegenwirkt. Erst im weiteren Verlauf des Brandtests, d.h. bei höheren Temperaturen wird der Effekt der Umwickelung gemäß der Erfindung deutlich. Hier steigt die Temperatur an dem Messpunkt **M₂** stärker an als an dem Messpunkt **M₃** was darauf zurückzuführen ist, dass über die Umwicklung deutlich mehr Wärme von der Rohrleitung abgeführt werden konnte als ohne. Dies zeigt ebenfalls, dass durch die Umwickelung der Rohrleitung mit einem Geflecht gemäß der der Erfindung die Zeitspanne verlängert werden konnte, innerhalb der die Rohrleitung in der Brandschutzinstallation unterhalb einer kritischen Temperatur bleibt.

## Patentansprüche

1. Verwendung eines form- und biegbaren Geflechts aus einem nicht brennbaren Material mit einem Wärmeleitkoeffizient λ_{G} zur Verlängerung der Zeitspanne in dem ein Leitungsstrang, der aus einem Material mit einem Wärmeleitkoeffizienten λ_{R} besteht, in einer Brandschutzinstallation unterhalb einer kritischen Temperatur bleibt, mit der Maßgabe, dass der Wärmeleitkoeffizient λ_{G} größer als der Wärmeleitkoeffizient λ_{R} ist.

2. Verwendung nach Anspruch 1, **dadurch gekennzeichnet, dass** das Geflecht ein Gewebe, Gewirk oder Gestrick ist.

3. Verwendung nach Anspruch 1 oder 2, **dadurch gekennzeichnet, dass** das Material unter Edelstahl, Kupfer, Aluminium oder Legierungen davon ausgewählt ist.

4. Verwendung nach Anspruch 3, **dadurch gekennzeichnet, dass** das Material Aluminium ist.

5. Verwendung nach einem der vorhergehenden Ansprüche, **dadurch gekennzeichnet, dass** die Dicke und die Länge des Geflechts in Abhängigkeit von der Beschaffenheit des Leitungsstrangs so gewählt sind, dass hinreichend Wärme abgeführt werden kann, damit die Zeitspanne innerhalb der die Temperatur des Leitungsstrangs unterhalb einer kritischen Temperatur bleibt, verlängert werden kann.

6. Verfahren zur Verlängerung der Zeitspanne in der ein Leitungsstrang in einer Brandschutzinstallation unterhalb einer kritischen Temperatur bleibt, die aus Materialien mit einem Wärmeleitkoeffizienten λ_{R} bestehen, wobei unmittelbar vor der Abschottung einer Durchführungsöffnung in einem Bauteil ein Leitungsstrang ein- oder beidseitig mit einem Geflecht aus einem nicht brennbaren Material mit einem Wärmeleitkoeffizient λ_{G} umwickelt werden, mit der Maßgabe, dass der Wärmeleitkoeffizient λ_{G} größer als der Wärmeleitkoeffizient λ_{R} ist.

7. Verfahren nach Anspruch 6, **dadurch gekennzeichnet, dass** der Leitungsstrang auf so einer Länge mit dem Geflecht umwickelt wird, dass hinreichend Wärme abgeführt werden kann, damit die Temperatur des Leitungsstrangs unterhalb einer kritischen Temperatur bleibt.
